# EUROPÄISCHE PATENTSCHRIFT

(11) **EP 4 050 176 B1**
(45) Veröffentlichungstag und Bekanntmachung des Hinweises auf die Patenterteilung: **24.09.2025**
(21) Anmeldenummer: 22158754.6
(22) Anmeldetag: 25.02.2022
(51) Int. Cl.: E04D 13/14, F16L 5/02, B29C 65/36, E04D 5/14, B29C 65/32

(54) **VERFAHREN ZUM HERSTELLEN EINER DURCHFÜHRUNG DURCH EINEN DACHBELAG**
METHOD FOR MAKING A FEEDTHROUGH THROUGH A ROOF LINING
PROCÉDÉ DE FABRICATION D'UNE TRAVERSÉE À TRAVERS UN REVÊTEMENT DE TOITURE

(30) Priorität: 25.02.2021 DE 102021104470
(43) Veröffentlichungstag der Anmeldung: 31.08.2022
(73) Patentinhaber: Santo, Wilfried, 79541 Lörrach-Hauingen (DE)
(72) Erfinder: Santo, Wilfried, 79541 Lörrach-Hauingen (DE)
(74) Vertreter: Patentanwälte und Rechtsanwalt Weiß, Arat & Partner mbB

(56) Entgegenhaltungen:
- WO-A1-2015/082680
- DE-A1- 19 634 453
- US-A1- 2012 233 958

## Beschreibung

Die Erfindung betrifft ein Verfahren zum Herstellen einer Durchführung durch einen Dachbelag mit einem Teller und einer Matte, welche mit dem Dachbelag eine Verbindung eingeht, wobei dem Teller und/oder der Matte ein Induktionselement zugeordnet wird, sowie eine nach diesem Verfahren hergestellte Durchführung durch einen Dachbelag.

### Stand der Technik

Die vorliegende Erfindung befasst sich mit einer neuartigen Dichtungstechnik der verschiedenen Durchführungen auf Dächern, vorzugsweise auf Flachdächern. Auf den Dächern gibt es verschiedene Elemente, die durch die Deckung/Abdichtung durchgeführt und möglichst dauerhaft abgedichtet werden müssen. Dazu zählen Entlüftungsdurchführungen, Blitzableiter, Wasserabläufe, Speier, Notabläufe und, zunehmend neu, sogenannte Absturzsicherungen.

Die Flachdachdichtungen sind Bahnen aus Bitumen, PVC, PP und diversen Abarten dieser Stoffe. Die Bahnen werden miteinander verschweißt oder verklebt. Meistverwendet ist weiterhin Bitumen.

Die verwendeten Durchführungselemente sind meist aus PP. Diese müssen dauerhaft dicht mit der verlegten Bahn, meist Bitumen, verbunden werden. Dies geschieht mit Gasbrennern oder mittels eines Heißluftföhns, der die Unterseite des Tellers des Durchführungselements und die Oberseite der Bitumenbahn bis nahe dem Schmelzpunkt erwärmen. Die erwärmten Flächen werden dann zueinander gefügt. Bei der Erwärmung ist kaum zu vermeiden, dass gesundheitsgefährdende Dämpfe entstehen, die den Mitarbeiter gefährden können. Weitere Risiken liegen in der Bearbeitung selbst. Bei Durchwärmung entstehen Löcher, andere Stellen können schon wieder abgekühlt sein und somit die innige, dauerhafte Dichtheit gefährden.

Für öffentliche Gebäude wird vielmals die Verbindung mittels Edelstahlelementen (Ringe) vorgeschrieben, mit denen die Dichtbahn und das Durchführungselement mit Hilfe vieler Schrauben miteinander verspannt werden. Nachteil ist hier, dass die Schrauben jährlich nachgezogen werden müssen, da die verbundenen Stoffe unter dem Druck relaxieren und die Vorspannung verloren geht.

Auch andere durchgeführte Elemente, wie Entlüftungsrohre, Blitzableiter oder Absturzsicherungen, sind abzudichten. Hier werden heute vorzugsweise Schrumpfschläuche verwendet, die umlaufend und über die Länge wieder mit einem Gasbrenner/Heißluftföhn erwärmt werden. Die Qualität und Zuverlässigkeit hängen hier wieder von der Gewissenhaftigkeit sowie der Erfahrung des Mitarbeiters ab. Schäden sind oftmals erst langfristig feststellbar und mit erheblichen Kostenrisiken verbunden. Oft wird auch auf den Schrumpfschlauch verzichtet und die Durchführung mit Bitumen oder Teer umstrichen und damit gedichtet. Auch hier ist das Ergebnis mehr Zufall als Qualität.

Gegenüber den bisher üblichen Verbindungen PP mit der Bitumenbahn durch das sogenannte Kaschieren, das heißt, Erwärmen der Bitumenmatte mit Infrarotstrahler und Aufpressen der Bahn auf das Rohr aus PP. Dies ist ein handwerklich und prozesstechnisch schlecht kontrollierbarer langsamer Prozess. Zudem hält die Matte auf dem Rohr nur durch eine geringe Adhäsion durch die Wärmeeinwirkung und das Aufschmelzen des Bitumens auf einem schlecht klebbaren Polypropylen-Kunststoff. Die Adhäsion ist auch reversibel, sowie wieder Wärme eingebracht wird, was natürlich ein erheblicher prinzipieller Nachteil ist, weil in der Weiterverarbeitung also dem Verkleben der Rohrmatte auf die Dachbitumenmatte wieder Wärme zugeführt werden muss.

Auf dem Dach wird die vorab durch Kaschieren aufgebracht Bitumenbahn durch Verschweißen mit dem Gasbrenner mit der Dachbitumenbahn verbunden. Durch den zweiten Wärmeprozess beim Aufschweißen der Matte auf die Dachbahn kann sich daher die zuvor nur durch Wärme verbunden Rohr-Bitumenmatte wieder von dem Rohr lösen. Die Qualität der Verbindung und damit die Dichtigkeit eines ganzen Flachdaches ist somit im Wesentlichen nur von der Erfahrung, dem handwerklichen Geschick und dem genauen Arbeiten des Dachdeckers abhängig. Daher ist dies ein äußerst kritischer Prozess, der leicht zu verdeckten Mängel und erheblichen Schäden führen kann, da ein undichtes Dach oft erst spät anhand von Bauschäden durch eindringendes Wasser erkannt werden und die undichten Stellen teilweise schwer und nur mit großem Aufwand zu entdecken sind.

Aus der DE 196 34 453 A1 ist eine Anordnung zur mechanischen Befestigung von Bahnen auf einem festen Untergrund bekannt. Dabei werden grossflächige Unterlegscheiben und entsprechende Befestiger eingesetzt. Die grossflächigen Unterlegscheiben sind mit einer Vielzahl von Durchgangsöffnungen versehen und vorzugsweise als Lochblech ausgeführt. Unterhalb der Unterlegscheiben ist ein Abschnitt aus dem gleichen Material, wie das Material der Bahnen angeordnet. Mittels induktiver Erwärmung der Unterlegscheibe werden die einander zugewandten Oberflächen des Abschnitts und der Bahn angeschmolzen und durch die Durchgangsöffnungen hindurch fest miteinander verbunden.

Die WO 2015/082680 A1 wiederum befasst sich mit einem Verfahren zum Montieren einer Dachabdeckung in Abschnitten, wobei die Dachabdeckung eine Membran aus Bitumen und ein Metall umfasst. Dabei erfolgt ein Montieren der Dachabdeckung in Abschnitten, wobei eine oder mehrere Nähte und/oder überlappende Regionen zwischen den Abschnitten der Dachabdeckung gebildet werden. Das Metall in der einen oder den mehreren Nähten und/oder überlappenden Regionen wird mittels magnetischer Induktion erwärmt, wodurch es zu einem Zusammenschmelzen des Bitumens im Bereich der Nähte bzw. der überlappenden Regionen kommt. Hierzu wird ein Generator verwendet, der eine Induktionsspule umfasst und der mit einer bestimmten Geschwindigkeit über die sich überlappenden Regionen bewegt wird.

Aus der US 2012/0233958 A1 ist eine Dachhalterung bekannt, die der Festlegung von zusätzlichen Dacheinrichtungen, wie beispielsweise Schneefänger, Solarpanels, Antennen usw. dient. Diese Anordnung weist eine erste Membran auf, die mittels einer Schraube mit einer Platte, eine zweiten Membran, einer Druckscheibe, einer Unterlegscheibe und einer Mutter zu einer Einheit zusammengefasst werden kann. Dabei kann die Platte zwischen der ersten und der zweiten Membran eine Metallscheibe sein, jedoch auch aus Kunststoff bestehen. In einem Ausführungsbeispiel wird die erste Membran von einer Scheibe unterlegt, die dann auf eine nicht penetrierende Methode, wie beispielsweise Aufkleben, auf einer Dachhaut festgelegt wird.

In einem weiteren Ausführungsbeispiel kann diese Dachanordnung durch eine Wärmequelle, wie beispielsweise eine Induktionsspule erwärmt werden, wobei der Klebstoff aufgrund dieser Erwärmung aufschmilzt. Wenn er sich verfestigt, kann der Klebstoff die Dachanordnung mit der Dachmembran verbinden.

### Aufgabe

Der vorliegenden Erfindung liegt die Aufgabe zugrunde, Dachdurchführungen zu schaffen, die wesentlich einfacher zu handhaben sind und ihrer Dichtfunktion wesentlich gerechter werden.

### Lösung der Aufgabe

Zur Lösung der Aufgabe werden ein Verfahren gemäß Anspruch 1 und eine Durchführung gemäß Anspruch 4 vorgeschlagen.

Die Verbindung Bitumen zu Bitumen ist ein breit angewendetes Verfahren. Die erfindungsgemäße Lösung ist die im Spritzgussverfahren erzeugte Verbindung von PP mit einem Stück Bitumenbahn.

Bei dem erfindungsgemäßen Aufbringen der Bitumenmatte auf das Rohr durch Spritzgießen mit mechanischer Verankerung ist das Lösen durch Wärmeeinwirkung kaum möglich. Dadurch ist nur noch die bauseitige Verbindung der Rohrmatte mit Wärme mit der Dachbitumenbahn notwendig und deshalb westlich unkritischer. Der ganze Prozess wird dadurch bauseitig einfacher und robuster und was wesentlich ist: Deutlich sicherer!

Die Prozesssicherheit ist auch ein großer monetärer Vorteil, da ein durchschnittlicher zu spät entdeckter Schaden an einem Flachdach durch die Sekundärschäden an Isolierung, Putz, Bodenbelägen, Elektroinstallation usw. ohne weiteres mehr 100.000 EUR kosten kann.

Für diese im Spritzgießverfahren hergestellte Verbindung werden folgende Lösungen vorgeschlagen:
a.) Das Bitumenbahnstück (Matte) wird, vorteilhaft über ein Handlingsgerät, in das Spritzwerkzeug für die Durchführung in die Spritzgießmaschine eingelegt. Aufgrund der hohen Massetemperatur des eingespritzten Kunststoffs wird die Bitumenmatte angeschmolzen und es entsteht eine innige Verbindung.
b.) Um die mechanische Festigkeit und die Robustheit der Verbindung zu erhöhen kann die Bitumenmatte im Bereich des Tellers der Durchführung mit Durchbrüchen versehen werden, durch die der Kunststoff durchfließt und auf der gegenüberliegenden Seite z.B. einen Nietkopf bildet. Alternativ kann mit Erzeugung des Durchbruchs eine Vertiefung eingeprägt werden in der sich der Kopf bilden kann. Mechanische Belastungen werden dann im Wesentlichen von den Durchspritzungen aufgenommen.
c.) Die Belastbarkeit wird noch dadurch weiter gesteigert, dass zu den Durchbrüchen nach b.) gegenüber dem vorhandenen Teller ein zweiter Teller gespritzt wird. Die Matte ist dann zwischen den zwei Tellern unter Vorspannung, verursacht durch den Schrumpf bei der Abkühlung des Kunststoffs, gehalten. Um eine gleichmäßige Auflage der Durchführung auf dem Dach oder der Isolierung zu gewährleisten, wird der Randbereich des unteren Tellers nach außen hin abgeflacht.

Die Dichtigkeit soll über ein hoch elastisches und unter Vorspannung zum durchgeführten Objekt und zum Durchführungselement mittels einer Formdichtung (Dichtung) erzeugt werden. Formdichtungen können u.a. aus Silikon, TPE oder EPDM und ähnlichen Werkstoffen hergestellt werden.

Gegenüber der Durchführung und dem durchgeführten Objekt soll das Dichtelement im Durchmesser kleiner gestaltet sein um eine Vorspannung sicher zu stellen. Weiter wird es als vorteilhaft angesehen, den Sitz der Dichtung auf der Durchführung durch einen Formschluss in axialer Richtung zu bestimmen. Unvollständige Montage ist sofort deutlich und erkennbar. Weiter wird durch den Formschluss die Positionierung dauerhaft gesichert.

Im oberen Teil der Dichtung, der gegen das durchgeführte Element dichtet, werden Dichtlippen empfohlen. Die Dichtlippen formen sich an die Oberfläche des Elements auch bei geringen Oberflächenfehlern an.

Zur Montageerleichterung kann die Dichtung innen oder allseitig mit einem Gleithilfsstoff beschichtet werden. Alternativ kann dem Werkstoff, aus dem die Dichtung hergestellt wird, ein an die Oberfläche diffundierender Stoff zugesetzt werden. Möglich sind hier u.a. Silikonöle oder Wachse.

Die Abdichtung der Durchführungen zum durchgeführten Element durch die vorgeschlagene spezifische Formdichtung hat gegenüber dem heute üblichen Schrumpfschlauch erhebliche Vorteile bezüglich Prozesssicherheit - beim Schrumpfschlauch ist diese nur durch das gewissenhafte und handwerklich geschickte Arbeiten des Monteurs gewährleistet, bei der vorgeschlagen Dichtung ist dies durch die Dichtung selbst bestimmt und die richtige Montage kann leicht von außen geprüft werden.

Die elastische Vorspannung der Dichtung, in Verbindung mit den aufgebrachten Dichtlippen, gewährleisten auch beim Relaxieren der abzudichten Elemente oder bei einer Verschiebung der Dichtung auf dem Rohr durch Sturm oder äußere Einwirkung eine dauerhafte sichere Abdichtung. Die vorgeschlagenen Werkstoffe wie Silikon und TPU sind UV stabil und bleiben auch bei Minus-Temperaturen elastisch.

Durch die Trennung des Dichtelements von der Durchführung braucht man nur eine Bitumenmatte für verschiedene Kabel- und Rohrdicken. Den unterschiedlichen Kabel- und Rohrdicken wird durch unterschiedliche Durchführungen Rechnung getragen. Diese können auch leicht eingefärbt werden, so dass für den Monteur leicht ersichtlich ist für welchen Anwendungszweck er welche Dichtung benutzen muss.

Die Durchführungen sind aufgrund der angespitzten Bitumenmatte zwar groß und etwas unhandlich. Die gewählte Form ermöglicht aber eine gute Stapelbarkeit, so das mehr Teile, z.B. 5 Stück, problemlos in einen Karton gepackt werden können.

Durch die bessere Verbindung der Umspritzung gegenüber der heute üblichen kaschierten Variante kann die Fläche der Umspritzung gegenüber der Kaschierung um min 50% reduziert werden. Dadurch wird das Bauteil (Durchführung mit Bitumenmatte) bei gleicher Haftungsfläche auf der Dachbahn deutlich kleiner. Dies verbessert wiederum die Handhabung erheblich.

Gemäss der Erfindung ist ferner vorgesehen, dass zum Herstellen einer Durchführung durch einen Dachbelag mit einem Teller und einer Matte, welche mit dem Dachbelag eine Verbindung eingeht, dem Teller und/oder der Matte ein Induktionselement zugeordnet wird. Dieses Induktionselement hat im wesentlichen die Aufgabe, die Matte und/oder den Dachbelag so zu erwärmen, dass beide miteinander eine innige Verbindung eingehen können. Hierzu ist einmal vorgesehen, dass Teller und Matte sowie Induktionselement gemeinsam in einem Spritzgiesswerkzeug miteinander verbunden werden. D.h., Matte und Induktionselement werden in die Form eingelegt. Sodann wird Kunststoffmasse in die Form so eingeführt, dass sich an der Matte der Teller ausbildet, wobei das sich zwischen dem Teller und der Matte befindliche Induktionselement in den Teller eingedrückt wird. Hierzu weist das Induktionselement bevorzugt Durchbrechungen auf, in die Material der Matte einfliessen kann. Sollte die Matte aus Bitumen bestehen, so ist dieses Material Bitumen.

Zur besseren Halterung der Matte, die meist sehr flexibel ist, wird noch vorgesehen, dass der Durchführung andererseits von Matte und Induktionselement ein Gitter oder zweiter Teller zugeordnet wird, so dass Matte und Induktionselement zwischen Gitter und Teller gefangen sind.

Eine andere Möglichkeit, für die auch gesondert Schutz begehrt wird, besteht aber auch, zuerst die Matte und die eigentliche Durchführung mit dem Teller, der die Matte untergreift, in einem Spritzgiesswerkzeug herzustellen und erst danach mit dem Induktionselement zu verbinden. Dies kann durch ein Induktionsgerät erfolgen, welches der Matte und/oder dem Teller aufgesetzt wird. Dabei soll das Gewicht des Induktionsgeräts so gewählt werden, dass es einen Druck auf Matte und Induktionselement ausübt, so dass die zu verbindende Flächen sicher aufeinander gepresst werden. Auch dabei fliesst Material der Matte in entsprechende Durchbrechungen in dem Induktionselement ein.

Zur Erwärmung des Induktionselementes wird ein Induktionsgerät mit Spule, Leistungsregler und Zeitsteuerung gewählt. Besonders vorteilhaft ist es, wenn in dem Induktionsgerät ein Datenspeicher integriert wird, der vor allem die Parameter Leistung und Zeit definiert für verschiedene zu verbindende Stoffe und für verschiedene zu verbindende Flächengrössen gespeichert hat, die abgerufen werden können. Über die Prozessdaten Leistung und Zeit findet auch eine Überwachung statt. Beispielsweise sind Zustände denkbar, bei denen die notwendigen Leistungen nicht erreicht werden, z.B. wenn der Abstand zwischen Induktionsgerät und Induktionselement zu gross oder zu klein ist. In einem Fall wird das Induktionselement nicht ausreichend, im anderen Fall zu hoch erwärmt. Die gespeicherten Daten sollen dies ausgleichen.

Des Weiteren soll am Induktionsgerät auch eine Standorterfassung (GPS) vorgesehen werden, so dass sichergestellt wird, dass auch alle zu verschweissenden Einheiten auf dem Dach bearbeitet wurden. Hierdurch ist eine sichere Prozessbeurteilung automatisch möglich, welche die Ist-Parameter dokumentiert und automatisiert bewertet. In einem Fehlerfall sollten dann z.B. optische oder akustische Signale ausgegeben werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht einer Durchführung durch einen Dachbelag;
**Figur 2** einen Querschnitt durch die Durchführung gemäss Figur 1;
**Figur 3** eine Seitenansicht eines vergrössert dargestellten Ausschnitts A aus Figur 2;
**Figur 4** eine vergrössert dargestellte Seitenansicht eines Ausschnitts eines weiteren Ausführungsbeispiels einer Durchführung;
**Figur 5** eine perspektivische Unteransicht der Durchführung entsprechend dem Ausführungsbeispiel gemäss Figur 4;
**Figur 6** einen vergrössert dargestellte Seitenansicht eines weiteren Ausführungsbeispiels einer Durchführung;
**Figur 7** eine Seitenansicht eines weiteren Ausführungsbeispiels einer Durchführung;

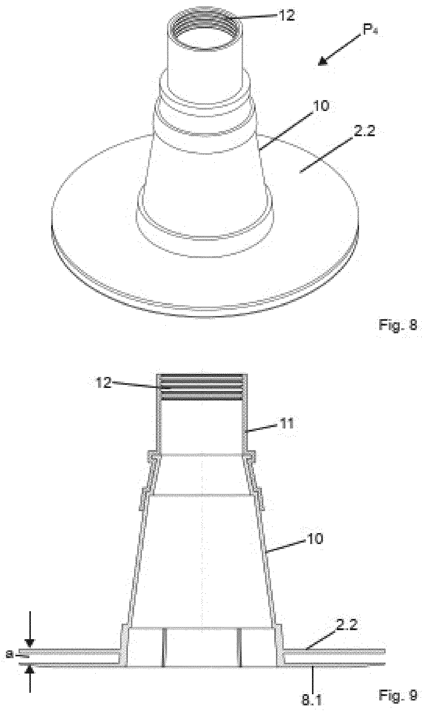

**Figur 8** eine perspektivische Ansicht eines weiteren Ausführungsbeispiels einer Durchführung;
**Figur 9** einen Querschnitt durch die Durchführung gemäss Figur 8;
**Figur 10** eine perspektivische Ansicht eines Ausführungsbeispiels einer erfindungsgemässen Durchführung in Draufsicht;
**Figur 11** eine perspektivische Ansicht der Durchführung gemäss Figur 10 in Unteransicht;
**Figur 12** eine perspektivische Ansicht der Durchführung gemäss den Figuren 10 und 11 in Explosionsdarstellung.

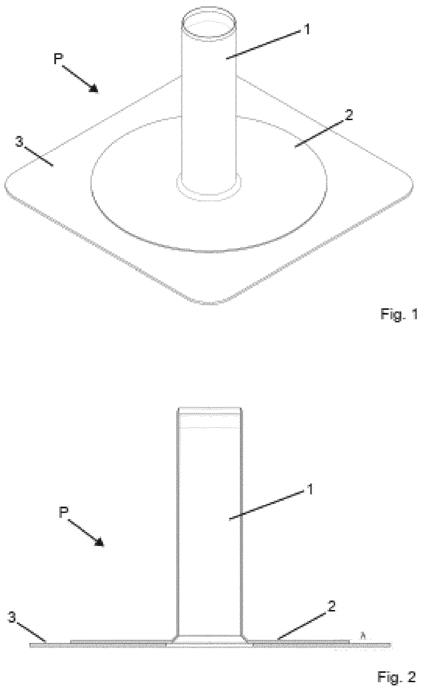

Gemäss Figur 1 weist ein erstes Ausführungsbeispiel einer Durchführung P einen Rohrabschnitt 1 auf, an den ein Teller 2 angeformt ist. Dieser Teller 2 sitzt auf einer Matte 3 auf, die im gezeigten Ausführungsbeispiel ein etwa rechteckiges Bitumenbahnstück ist. Diese Matte 3 soll mit dem Teller 2 der Durchführung P innig verbunden werden, so dass dann bei nachfolgender Benutzung dieser Durchführung P die Matte 3 auf einfachem Wege mit einem nicht näher gezeigten Dachbelag verbunden werden kann, was z.B. bei einer Verbindung von Bitumen der Matte mit Bitumen des Dachbelags durch einfaches Erwärmen mittels eines Gasbrenners geschieht.

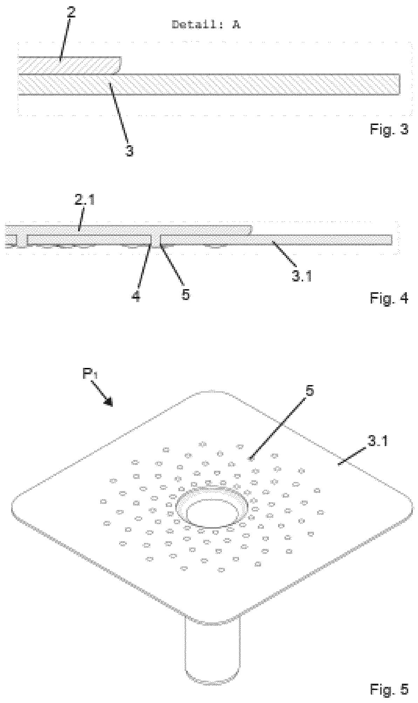

Die Funktionsweise der vorliegenden Erfindung ist folgende:
Die Herstellung des Rohrabschnitts 1 zusammen mit dem Teller 2 soll in einer Spritzgiessmaschine erfolgen. Erfindungsgemäss wird in dieses Spritzwerkzeug noch vor dem Einführen des Werkstoffs für den Rohrabschnitt 1 und den Teller 2 die Matte 3 eingelegt und dann das Material für den Rohrabschnitt 1 und den Teller 2 eingeführt. Aufgrund der hohen Massetemperatur des eingespritzten Kunststoffs wird die Bitumenmatte 3 angeschmolzen, so dass eine innige Verbindung zwischen Teller 2 und Matte 3 entsteht, wie dies in Figur 3 angedeutet ist.

Bei einem weiteren Ausführungsbeispiel der Erfindung gemäss den Figuren 4 und 5 werden in eine Matte 3.1 einer Durchführung P1 Durchbrüche 4 eingeformt, die beim Einspritzen des Kunststoffs für den Teller 2.1 von dem Werkstoff des Kunststoffs durchflossen werden, wobei sie ggf. auf der anderen Seite des Kunststoffs einen Pilz- oder Nietkopf ausbilden können.

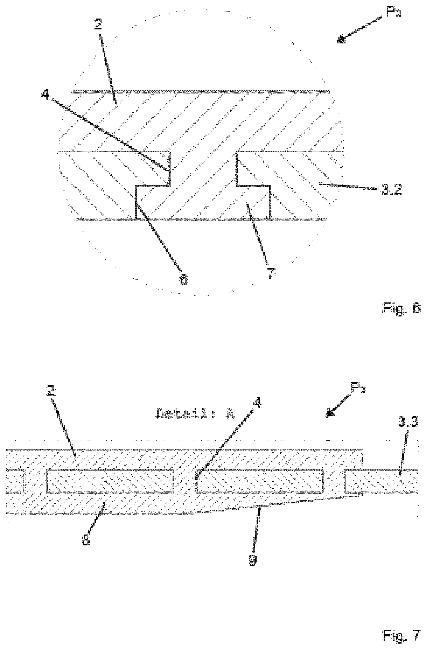

In Figur 6 ist nur ein kleiner weiterer Ausschnitt aus einem weiteren Ausführungsbeispiel einer Durchführung P2 angedeutet, bei dem in eine entsprechende Matte 3.2 ein Durchbruch mit einer Vertiefung 6 eingeformt ist. In dieser Vertiefung 6 kann sich ein Kopf 7 als Widerlager ausbilden. Hierdurch sind Matte 3.2 und Teller 2 quasi untrennbar verbunden.

Gemäss dem weiteren Ausführungsbeispiel einer Durchführung P3 gemäss Figur 7 wird dem Teller 2 ein Unterteller 8 zugeordnet, wobei der entsprechende Werkstoff für die beiden Teller 2 und 8 Durchbrüche 4 in einer Matte 3.3. durchfliesst. Zum Zwecke einer gleichmässigen Auflage dieser Durchführung P3 auf dem Dach oder der Dachisolierung ist der Unterteller 8 nach aussen hin mit einer Abflachung 9 versehen.

Die vorliegende Erfindung eignet sich auch für Durchführungen P4, die wiederum dazu geeignet sind, dass ein Objekt, beispielsweise eine Rohrleitung durch sie hindurchgeführt wird. In diesem Fall weist die Durchführung P4 eine konisch sich verengende Führung 10 auf, an die ein Teller 2.2 und ein Unterteller 8.1 angeformt sind. Teller 2.2 und Unterteller 8.1 halten einen Abstand a ein, in den eine nicht näher gezeigte Matte eingelegt werden kann, wobei eine in Figur 7 gezeigte Verbindungsmöglichkeit zwischen den Tellern 2.2 und 8.1 bevorzugt wird.

Auf die Führung 10 ist ein Dichtelement 11 aufgeclipst, in dessen Inneren Dichtringe 12 vorgesehen sind, die in Gebrauchslage beispielsweise ein Rohr eng umschliessen und damit abdichten. Für dieses Dichtelement 11 wird im Übrigen auch separat Schutz begehrt.

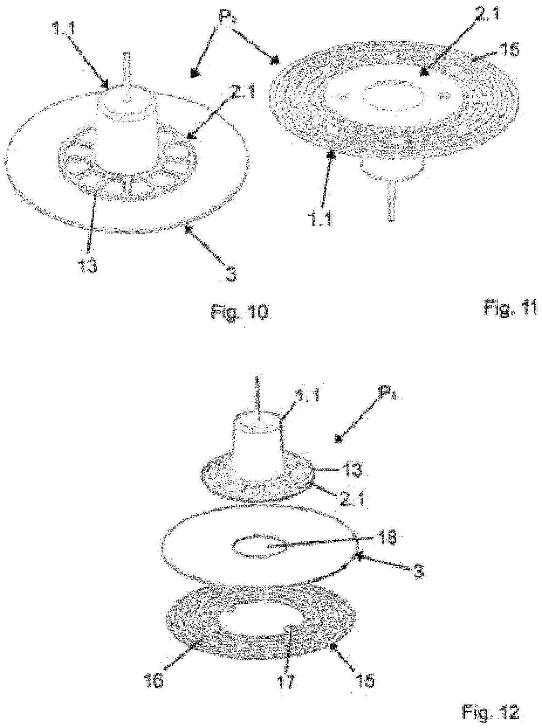

Eine weitere erfindungsgemässe Durchführung P5 weist gemäss den Figuren 10 und 11 einen Rohrabschnitt 1.1 auf, dem die Matte 3 zugeordnet ist, wobei der Rohrabschnitt 1.1 die Matte 3 etwa mittig durchgreift und andererseits der Matte 3 mit einem Teller 2.1 einstückig verbunden ist, wobei dieser Teller 2.1 die Matte 3 untergreift. Auf der Oberseite der Matte 3 ist dem Rohrabschnitt 1 ein Gitter 13 angeformt.

Zwischen der Matte 3 und dem Teller 2.1 befindet sich ein Induktionselement 15, welches im vorliegenden Ausführungsbeispiel kreisförmig ausgebildet ist und Durchbrechungen 16 aufweist.

Die Herstellung dieser Durchführung P5 wird anhand Figur 12 näher erläutert, wobei dies aber nur ein Ausführungsbeispiel ist. In eine entsprechende Form eines Spritzgiesswerkzeugs wird in den entsprechenden Formhohlraum die Matte 3 und das Induktionselement 15 eingelegt. Hierzu weist das Induktionselement 15 entsprechende Zentrierbohrungen 17 auf, über die das Induktionselement 15 in der Form justiert wird. Nunmehr erfolgt der Einspritzvorgang der Kunststoffmasse für den Teller 2.1, den Rohrabschnitt 1.1 und das Gitter 13, wobei die Masse für das Gitter 13 und den Rohrabschnitt 1.1 durch die zentrische Öffnung 18 der Matte 3 fliesst. Hierdurch werden Rohrabschnitt 1.1, Matte 3, Gitter 13 und Teller 2.1 zu einer Einheit verbunden, die beispielsweise über einer entsprechenden Öffnung in einem Flachdach eines Gebäudes auf die sich dort befindliche Dachbahn, beispielsweise aus Bitumen, aufgesetzt werden kann.

Nach dem Aufsetzen und Ausrichten dieser Durchführung P5 wird auf die Matte 3 ein nicht näher gezeigtes Induktionsgerät aufgesetzt, welches das Induktionselement 15 aufheizt, so dass sowohl die Matte 3, die bevorzugt ebenfalls aus Bitumen besteht, aufgeschmolzen als auch die Dachbahn erwärmt bis aufgeschmolzen wird, so dass sich beide durch die Durchbrechungen 16 hindurch innig miteinander verbinden. Dabei wird das Gewicht des Induktionsgerätes so gewählt bzw. der über das Induktionsgerät ausgeübte Druck so eingestellt, dass die zu verbindenden Flächen sicher aufeinander gepresst werden.

**Bezugszeichenliste**

| | | | | | |
|---|---|---|---|---|---|
| 1 | Rohrabschnitt | 34 | | 67 | |
| 2 | Teller | 35 | | 68 | |
| 3 | Matte | 36 | | 69 | |
| 4 | Durchbruch | 37 | | 70 | |
| 5 | Nietkopf | 38 | | 71 | |
| 6 | Vertiefung | 39 | | 72 | |
| 7 | Kopf | 40 | | 73 | |
| 8 | Unterteller | 41 | | 74 | |
| 9 | Abflachung | 42 | | 75 | |
| 10 | Führung | 43 | | 76 | |
| 11 | Dichtelement | 44 | | 77 | |
| 12 | Dichtring | 45 | | 78 | |
| 13 | Gitter | 46 | | 79 | |
| 14 | | 47 | | | |
| 15 | Induktionselement | 48 | | | |
| 16 | Durchbrechung | 49 | | a | Abstand |
| 17 | Zentrierbohrung | 50 | | | |
| 18 | Öffnung | 51 | | | |
| 19 | | 52 | | | |
| 20 | | 53 | | | |
| 21 | | 54 | | | |
| 22 | | 55 | | | |
| 23 | | 56 | | P | Durchführung |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Herstellen einer Durchführung (P5) durch einen Dachbelag mit einem Teller (2) und einer Matte (3), welche mit dem Dachbelag eine Verbindung eingeht, wobei dem Teller (2) und/oder der Matte (3) ein Induktionselement (15) zugeordnet wird, wobei Teller (2) und Matte (3) in einem Spritzgiesswerkzeug miteinander verbunden werden und einschließend die Matte (3) mit dem Induktionselement (15) verbunden wird.

2. Verfahren zum Herstellen einer Durchführung (P5) nach Anspruch 1 für ein Rohr durch einen Dachbelag mit einem Rohrabschnitt (1, 1.1), einem Teller (2, 2.1) und einer Matte (3), welche mit dem Dachbelag eine Verbindung eingeht, wobei dem Teller (2) und/oder der Matte (3) ein Induktionselement (15) zugeordnet wird,
wobei die Durchführung einen weiteren Teller (13) aufweist,
wobei Rohrabschnitt (1.1), Teller (2, 2.1, 13) und Matte (3) sowie Induktionselement (15) gemeinsam in einem Spritzgiesswerkzeug miteinander verbunden werden, wobei in eine Form eines Spritzgiesswerkzeugs in den entsprechenden Formhohlraum die Matte (3) und das Induktionselement (15) eingelegt und die Kunststoffmasse für den Teller (2.1), den Rohrabschnitt (1.1) und den weiteren Teller (13) eingespritzt wird, wobei die Masse für den weiteren Teller (13) und den Rohrabschnitt (1.1) durch eine zentrische Öffnung (18) der Matte (3) fliesst und Rohrabschnitt (1.1), Matte (3), weiterer Teller (13) und Teller (2.1) zu einer Einheit verbunden werden.

3. Verfahren nach Anspruch 1 **dadurch gekennzeichnet, dass** die Verbindung zwischen Matte (3) und Induktionselement (15) mittels eines Induktionsgerätes erfolgt, dessen Gewicht ausreicht, damit das Induktionselement (15) in die Matte (3) eingedrückt wird.

4. Durchführung (P5) hergestellt in einem Verfahren nach wenigstens einem der Ansprüche 1 bis 3, wobei das Induktionselement (15) Durchbrechungen (16) aufweist

5. Durchführung nach Anspruch 4, **dadurch gekennzeichnet, dass** die Matte (3.1-3.3) Durchbrüche (4) zum Aufnehmen von Material des Tellers (2.1) aufweist.

6. Durchführung nach Anspruch 5, **dadurch gekennzeichnet, dass** zumindest ein Teil der Durchbrüche (4) gestuft ausgebildet sind.

7. Durchführung nach wenigstens einem der Ansprüche 4-6, **dadurch gekennzeichnet, dass** der weitere Teller ein Gitter (13) ist.

## Claims

1. A method for producing a penetration (P5) through a roof covering with a plate (2) and a mat (3) which forms a connection with the roof covering, wherein an induction element (15) is assigned to the plate (2) and/or the mat (3), wherein the plate (2) and the mat (3) are joined together in an injection moulding tool, and subsequently the mat (3) is connected to the induction element (15).

2. The method for producing a penetration (P5) according to claim 1 for a pipe through a roof covering, comprising a pipe section (1, 1.1) with a plate (2, 2.1) and a mat (3) which forms a connection with the roof covering, wherein an induction element (15) is assigned to the plate (2) and/or the mat (3), wherein the penetration comprises a further plate (13), wherein the pipe section (1.1), plates (2, 2.1, 13), the mat (3) and the induction element (15) are joined together in an injection moulding tool, wherein in a mould of the injection moulding tool the mat (3) and the induction element (15) are inserted into the corresponding mould cavity and the plastic material for the plate (2.1), the pipe section (1.1) and the further plate (13) is injected, wherein the material for the further plate (13) and the pipe section (1.1) flows through a central opening (18) of the mat (3), and the pipe section (1.1), the mat (3), the further plate (13) and the plate (2.1) are connected to form a unit.

3. The method according to claim 1, **characterised in that** the connection between the mat (3) and the induction element (15) is effected by means of an induction device whose weight is sufficient to press the induction element (15) into the mat (3).

4. A penetration (P5) produced by a method according to at least one of claims 1 to 3, wherein the induction element (15) has openings (16).

5. The penetration according to claim 4, **characterised in that** the mat (3.1-3.3) has openings (4) for receiving material of the plate (2.1).

6. The penetration according to claim 5, **characterised in that** at least a part of the openings (4) are formed in a stepped manner.

7. The penetration according to at least one of claims 4 to 6, **characterised in that** the further plate is a grid (13).

## Revendications

1. Procédé de réalisation d'une traversée (P5) à travers un revêtement de toiture, comprenant un plateau (2) et un tapis (3) qui forme une liaison avec le revêtement de toiture,
dans lequel un élément d'induction (15) est associé au plateau (2) et/ou au tapis (3), le plateau (2) et le tapis (3) sont reliés eux dans un outil de moulage par injection, et le tapis (3) est relié à l'élément d'induction (15).

2. Procédé de réalisation d'une traversée (P5) selon la revendication 1 pour un tube à travers un revêtement de toiture, comprenant une portion de tube (1, 1.1), un plateau (2, 2.1) et un tapis (3) qui forme une liaison avec le revêtement de toiture,
dans lequel un élément d'induction (15) est associé au plateau (2) et/ou au tapis (3),
la traversée comprend un autre plateau (13),
la portion de tube (1.1), le plateau (2, 2.1, 13) et le tapis (3) ainsi que l'élément d'induction (15) sont reliés ensemble dans un outil de moulage par injection,
le tapis (3) et l'élément d'induction (15) sont placés dans un moule d'un outil de moulage par injection dans la cavité de moule correspondante, et la masse de matière plastique pour le plateau (2.1), la portion de tube (1.1) et l'autre plateau (13) est injectée,
la masse pour l'autre plateau (13) et la portion de tube (1.1) s'écoule à travers une ouverture centrale (18) du tapis (3), et la portion de tube (1.1), le tapis (3), l'autre plateau (13) et le plateau (2.1) étant reliés en une unité.

3. Procédé selon la revendication 1,
**caractérisé en ce que** la liaison entre le tapis (3) et l'élément d'induction (15) est réalisée au moyen d'un appareil d'induction dont le poids est suffisant pour que l'élément d'induction (15) soit enfoncé dans le tapis (3).

4. Traversée (P5) réalisée par un procédé selon l'une au moins des revendications 1 à 3,
dans laquelle l'élément d'induction (15) présente des ajours (16).

5. Traversée selon la revendication 4,
**caractérisée en ce que** le tapis (3.1 - 3.3) présente des ajours (4) pour recevoir le matériau du plateau (2.1).

6. Traversée selon la revendication 5,
**caractérisée en ce qu'**au moins une partie des ajours (4) sont étagés.

7. Traversée selon l'une au moins des revendications 4 à 6,
**caractérisée en ce que** l'autre plateau est une grille (13).
